# FASCICULE DE BREVET EUROPEEN

(11) **EP 3 391 448 B1**
(45) Date de publication et mention de la délivrance du brevet: **11.09.2019**
(21) Numéro de dépôt: 16823230.4
(22) Date de dépôt: 16.12.2016
(51) Int. Cl.: H01M 8/1041, H01M 8/1067, H01M 8/1213, H01M 8/1018, C25B 1/00

(54) **DISPOSITIF ÉLECTROCHIMIQUE À CONDUCTION PROTONIQUE AVEC REFORMAGE INTÉGRÉ ET PROCÉDÉ DE FABRICATION ASSOCIÉ**
PROTONENLEITENDE ELEKTROCHEMISCHE ANORDNUNG MIT INTERNER REFORMIERUNG UND DAZUGEHÖRIGES HERSTELLUNGSVERFAHREN
PROTON CONDUCTING ELECTROCHEMICAL DEVICE WITH INTERNAL REFORMING, AND ASSOCIATED MANUFACTURING PROCESS

(30) Priorité: 17.12.2015 FR 1562711
(43) Date de publication de la demande: 24.10.2018
(73) Titulaire: Electricité de France, 75008 Paris (FR); Université de Montpellier, 34090 Montpellier (FR); Centre National de la Recherche Scientifique (CNRS), 75016 Paris (FR)
(72) Inventeur: MARRONY, Mathieu, 67270 Alteckendorf Haguenau (FR); TAILLADES, Gilles, 34990 Juvignac (FR); ROZIERE, Jacques, 34380 Saint Martin de Londres (FR); DAILLY, Julian, 76139 Hagsfeld (DE)
(74) Mandataire: Cabinet Plasseraud
(86) Numéro de dépôt international: PCT/EP2016/081560
(87) Numéro de publication internationale: WO 2017/103193

(56) Documents cités:
- US-A1- 2002 031 695
- US-A1- 2004 224 216
- US-A1- 2006 251 950
- US-A1- 2010 255 406
- US-A1- 2014 302 421

## Description

### DOMAINE TECHNIQUE

L'invention se rapporte au domaine des dispositifs électrochimiques à conduction protonique, tels que les piles à combustible (dites PEFC pour « protonic electrolyte fuel cell » selon la terminologie anglo-saxonne) et plus particulièrement les piles céramiques échangeuses de protons appelées PCFC pour «protonic ceramic fuel cell ». L'invention trouve également application dans des dispositifs électrochimiques similaires tels que les synthétiseurs d'ammoniaque, les électrolyseurs ou les appareils d'électro-réduction.

### ARRIÈRE-PLAN TECHNOLOGIQUE

Les dispositifs électrochimiques utilisant un conducteur protonique peuvent se présenter sous différentes formes. Généralement, ces dispositifs sont utilisés pour générer une tension électrique (utilisation en mode pile à combustible) pour la réduction d'une espèce oxydante et l'oxydation d'une espèce réductrice, ou bien produire une espèce réductrice et oxydante (utilisation en mode électrolyseur) via une réaction chimique par apport d'énergie électrique. Les espèces réductrices et oxydantes alimentent le dispositif pour assurer son fonctionnement. Ces dispositifs se composent généralement d'une électrode positive poreuse (cathode dans le cas d'une pile à combustible), d'une électrode négative pouvant être poreuse (anode dans le cas d'une pile à combustible), et d'un électrolyte conducteur protonique disposé entre les deux électrodes. Le processus fait intervenir des électrons en guise de porteurs de charge négative et des protons en guise de porteurs de charge positive.

Les piles à combustibles échangeuses de protons (ou PEFC), sont un exemple de tels dispositifs électrochimiques. Dans les PEFC, une tension électrique et de la chaleur sont générées par l'oxydation d'une espèce réductrice sur une électrode négative couplée à la réduction d'une espèce oxydante sur une électrode positive. Dans le cas des piles à combustible dihydrogène-dioxygène, les espèces réductrices et oxydantes impliquées dans le processus sont le dihydrogène et le dioxygène respectivement. La migration des protons générés lors d'un tel processus s'effectue à travers le conducteur protonique. La réaction chimique consommant les espèces réductrices et oxydantes sur les électrodes peut être inversée pour produire du combustible par apport d'énergie électrique et de chaleur.

Les piles à combustibles représentent une technologie prometteuse pour remplacer ou compléter d'autres méthodes de production d'énergie. Ces piles, qui ont fait l'objet de plusieurs perfectionnements depuis leur première apparition, peuvent être classées en plusieurs catégories selon plusieurs critères tels que la température de fonctionnement et la nature de l'électrolyte:
Parmi elles, la pile à membrane échangeuse de protons (ou PEMFC pour « proton exchange membrane fuel cell » selon la terminologie anglo-saxonne) requiert généralement la présence d'eau liquide pour fonctionner, et opère ainsi typiquement à des températures inférieures à 100°C. Le conducteur protonique séparant les deux électrodes y est constitué par un matériau polymère organique hydraté conducteur de protons, dont la conductivité est liée au degré d'hydratation. Le rendement électrique de ces cellules est typiquement compris entre 30% et 50% suivant la qualité du combustible à l'entrée.

La pile à oxyde solide à conduction anionique O²⁻ (ou SOFC pour « solide oxyde fuel cell » selon la terminologie anglo-saxonne) forme une autre catégorie. La SOFC présente un bon rendement électrique de l'ordre de 50% à 60%, et fonctionne à des températures comprises typiquement entre 750°C et 1000°C. Cette pile comprend entre l'électrode positive et l'électrode négative un électrolyte solide conducteur anionique O²⁻. Du fait des hautes températures mises en oeuvre dans cette pile, elle repose généralement sur l'utilisation de composants en céramique, de fabrication coûteuse.

Il existe, parmi les piles à oxyde solide une catégorie particulièrement intéressante de pile utilisant un électrolyte solide en céramique conductrice de protons (ces piles à combustible sont aussi appelées PCFC pour « protonic ceramic fuel cell » selon la terminologie anglo-saxonne). Les piles PCFC fonctionnent à des températures intermédiaires, comprises entre environ 400°C et 700°C. Ces températures permettent notamment l'utilisation de matériaux métalliques, moins coûteux que les matériaux céramiques des piles à combustible SOFC de l'art antérieur.

Les brevets EP 2270914 et US 2014/302421 proposent un exemple de pile à combustible échangeuse de protons PEFC, en particulier à base céramique de type PCFC.

Outre les piles à combustibles, d'autres dispositifs électrochimiques à conduction protonique reposent sur une architecture et des principes de fonctionnement similaires. La production d'espèces oxydantes et réductrices peut faire intervenir un dispositif d'électro-réduction, ou bien utiliser un dispositif analogue à une pile à combustible comme électrolyseur en inversant la réaction d'oxydo-réduction par apport d'électricité et de chaleur. D'autres réactions chimiques peuvent faire intervenir d'autres espèces telles que de l'azote pour synthétiser de l'ammoniaque par exemple.

Malgré leur fort potentiel, les dispositifs électrochimiques à conduction protonique pâtissent d'un inconvénient qui limite leur rendement énergétique. Il s'avère en effet que le conducteur électrolyte protonique (membrane polymère, céramique ou autre élément solide), ne tolère généralement pas la présence d'impuretés ou de certains gaz qui rentrent dans la composition des combustibles utilisés pour alimenter le dispositif en espèces réductrices et oxydantes. Ces impuretés et gaz constituent des contaminants pour le conducteur protonique qui le détériorent et réduisent la durée de vie du dispositif électrochimique. Parmi les gaz nocifs pour le conducteur protonique couramment rencontrés dans les combustibles figurent le dioxyde de carbone CO₂ et le sulfure d'hydrogène H2S. Ces gaz sont généralement présents dans des compositions de type hydrocarboné telles que le gaz naturel, les alcools, ou le biogaz par exemple.

Pour remédier à cet inconvénient, et protéger les dispositifs électrochimiques utilisant un électrolyte conducteur protonique, il est typiquement procédé à une étape de reformage du combustible hydrocarboné en amont du dispositif. Le reformage du combustible hydrocarboné permet d'en séparer les impuretés et les gaz nocifs évoqués ci-avant. Cette étape de reformage dite « externe » peut par exemple s'effectuer en phase vapeur ou bien par oxydation partielle catalytique (CPOX). Elle peut impliquer l'utilisation d'un système de piégeage en amont, par exemple un lit de charbon actif ou un absorbant à base de zinc, ou bien encore impliquer un processus de filtrage à plusieurs étapes. Le reformage, jugé nécessaire voire indispensable pour préserver un dispositif électrochimique à conducteur protonique tel qu'une pile à combustible, conduit ainsi à une architecture complexe impliquant deux unités couplées : reformeur et dispositif électrochimique. L'utilisation d'un reformeur externe rend le dispositif électrochimique moins ergonomique, plus coûteux et limite également son rendement global. En effet, pour produire une quantité jugée suffisante d'espèces réductrices pour le fonctionnement d'un dispositif électrochimique protonique, la présence du reformeur dont le rendement est inférieur à 100% implique de prévoir un excédent de biogaz pour compenser les pertes liées au rendement du reformeur.

Il est donc recherché un moyen permettant d'augmenter ce rendement et de simplifier le système tout en réduisant sa taille et son coût.

Pour y parvenir, une solution envisagée consiste à rendre l'électrode négative du dispositif électrochimique plus résistante aux contaminants, cette électrode étant exposée en premier lieu aux combustibles à base d'hydrogène. Cette solution prévoit une électrode négative en un matériau catalytique, dit catalyseur de reformage, susceptible d'être tolérant aux résidus de la réaction de reformage (H₂S, CO₂, phénomène de cokéfaction). Or les matériaux catalytiques actuels, tels que le Ru en PEMFC ou le Ni en SOFC et PCFC s'avèrent généralement coûteux à produire et engendrent des performances électriques et un seuil de tolérance limités du dispositif vis-à-vis des résidus de la réaction de reformage interne.

Il est par conséquent recherché un dispositif électrochimique utilisant un conducteur protonique de conception plus simple que les systèmes actuels utilisant un reformeur externe situé en amont du dispositif électrochimique. Il est également recherché un moyen de surmonter l'inconvénient posé par la sensibilité du dispositif électrochimique à conducteur protonique, et en particulier de son conducteur protonique, aux contaminants présents dans les combustibles alimentant le dispositif.

### EXPOSE DE L'INVENTION

Pour répondre aux problèmes exposés ci-avant, la présente invention propose un dispositif électrochimique à conduction protonique, comprenant :
- une électrode positive apte à réduire une espèce oxydante ;
- une électrode négative apte à oxyder une espèce réductrice ;
- un électrolyte conducteur protonique, en contact avec l'électrode positive poreuse et avec l'électrode négative.

Le dispositif électrochimique comprend en outre une couche apte à diffuser des protons et des électrons et formant barrière protectrice aux contaminants pour l'électrolyte conducteur protonique, ladite couche étant en contact avec l'électrolyte conducteur protonique d'une part et l'électrode négative d'autre part.

L'invention telle qu'exposée ci-avant permet d'intégrer au sein même d'un dispositif électrochimique à conducteur protonique un élément remplissant le rôle barrière protectrice aux contaminants pour l'électrolyte conducteur protonique, sans toutefois avoir d'incidence négative sur le fonctionnement du dispositif. L'invention propose ainsi d'intercaler, entre l'électrode négative siège à la fois du reformage interne et de la réaction d'oxydation du combustible formant les électrons et les protons, et l'électrolyte conducteur protonique, une couche ayant des propriétés mixtes. Les propriétés mixtes de conduction électrique et de conduction protonique de cette couche permettent de garantir de manière sélective et préférentiellement exclusive un transfert sans blocage des électrons et protons intervenant dans le fonctionnement du dispositif. Les composés autres que les électrons et protons formant des contaminants, néfastes pour le conducteur protonique, sont bloqués par cette couche. Cette couche constitue ainsi un filtre à protons et électrons intégré au sein même du dispositif électrochimique, sans gêner son fonctionnement normal.

Du fait de l'intégration de cette couche, entre l'électrode négative et l'électrolyte conducteur protonique, l'invention permet de s'affranchir d'un système encombrant mêlant un dispositif électrochimique à un reformeur externe et d'améliorer la stabilité chimique et donc le rendement global d'un dispositif électrochimique à conduction protonique utilisant des catalyseurs de reformage au niveau de l'électrode poreuse à combustible..

L'invention, en intégrant cette couche formant barrière protectrice aux contaminants pour le conducteur protonique, filtre les espèces gazeuses néfastes telles que le CO₂ ou le H₂S, ainsi que les autres contaminants gazeux ou non gazeux, et ne diffuse de manière sélective et préférentiellement exclusive que les protons et les électrons via la couche à conduction mixte. Par conséquent, cette couche protège l'électrolyte conducteur protonique non seulement contre les contaminants contenus dans les combustibles gazeux entrants utilisés au niveau de l'électrode négative, mais également contre les éventuels produits générés à cette électrode négative, autres que les électrons et les protons.

Selon un mode de réalisation, la couche apte à diffuser des protons et des électrons peut avoir une épaisseur comprise entre 1 µm et 10 µm.

Il a été observé que cette gamme d'épaisseurs constitue un compromis adapté aux spécificités des dispositifs électrochimiques à conduction protonique, notamment les piles à combustible. En effet, cinétique de diffusion et étanchéité vis-à-vis des contaminants évoluent différemment en fonction de l'épaisseur de la couche aux propriétés mixtes : la cinétique de diffusion protonique et électronique augmente lorsque l'épaisseur de la couche diminue, tandis que l'effet d'étanchéité aux contaminants se renforce lorsque l'épaisseur de la couche augmente. D'autre part, l'ajout d'une couche supplémentaire dans un dispositif électrochimique, notamment dans le cas d'une cellule de pile à combustible, peut contribuer à augmenter les dimensions globales d'un produit constitué d'un assemblage de plusieurs cellules. Une gamme d'épaisseurs comprises entre 1 µm et 10 µm pour cette couche, et plus particulièrement une épaisseur de 2 µm à 5 µm permet d'obtenir un rendement optimal dans le dispositif électrochimique utilisant un électrolyte conducteur protonique, sans rendre le dispositif encombrant.

Selon un mode de réalisation, la couche apte à diffuser des protons et des électrons peut posséder une porosité comprise entre 1 % et 10 % en volume.

Il a été observé que l'effet de barrière aux contaminants est maximal dans des couches denses dont les porosités ne représentent qu'entre 1 % et 10 %, plus particulièrement entre 1% et 5% du volume total de la couche. La faible porosité proposée dans la présente invention favorise le phénomène de sélectivité, en ne laissant passer préférentiellement que les protons et les électrons, tout en bloquant le passage d'autres composés.

Selon un autre mode de réalisation, la couche apte à diffuser des protons et des électrons peut comprendre un matériau de type ABB'O₃, dans lequel A est un élément choisi parmi le groupe II du tableau périodique, B est un élément choisi parmi le cérium ou le groupe IVB du tableau périodique, B' est un élément choisi parmi les lanthanides ou le groupe VIIIB du tableau périodique.

Selon un mode de réalisation, la couche apte à diffuser des protons et des électrons peut comprendre un matériau de type ABO₃, dans lequel A est un élément choisi parmi le groupe II du tableau périodique, B est un élément choisi parmi le cérium ou le groupe IVB du tableau périodique.

Ces matériaux, qui comprennent des électrolytes dérivés de la famille des pérovskites, sont adaptés aux températures de fonctionnement typiquement rencontrées dans des piles à combustibles à céramiques conductrices protoniques PCFC, comprises entre 400°C et 700°C et plus particulièrement à des températures supérieures à 550°C. Ils possèdent en outre une structure cristallographique adaptée permettant d'obtenir l'effet barrière aux contaminants, tout en possédant les propriétés mixtes recherchées de conduction préférentiellement exclusive de protons et d'électrons. En outre, ces composés sont stables chimiquement sous atmosphère réductrice, telle que celle qui se présente entre le conducteur protonique et l'électrode négative.

Selon un mode de réalisation, le dispositif peut en outre comprendre un support macroporeux en contact avec l'électrode négative, le support macroporeux étant apte à diffuser des espèces gazeuses.

Selon un mode de réalisation, le conducteur protonique peut être une membrane polymère échangeuse de protons.

Le dispositif ainsi constitué est une pile à combustible PEFC incluant le type PEMFC.

Selon un autre mode de réalisation, le conducteur protonique peut être un électrolyte solide en céramique apte à diffuser des protons.

Le dispositif ainsi constitué est une pile à combustible PCFC, ou bien une pile à combustible SOFC à conduction protonique de manière générale.

Selon un mode de réalisation, le matériau de la couche apte à diffuser des protons et des électrons est une céramique monophasée.

Dans un tel matériau, la structure pérovskite de la couche est une phase céramique unique.

Selon un mode de réalisation, le matériau de la couche apte à diffuser des protons et des électrons est un matériau multiphasé.

Dans un tel agencement du matériau, il est possible de trouver plusieurs domaines céramiques formant un composite ou bien des domaines céramiques et un ou des domaines métalliques.

Selon un mode de réalisation, matériau de la couche apte à diffuser des protons et des électrons est un matériau biphasé choisi parmi un composite céramique-céramique ou bien un composite céramique-métal.

Dans un tel agencement du matériau, il est possible de trouver deux domaines céramiques formant un composite ou bien un domaine céramique monophasé en combinaison avec un métal.

Selon un mode de réalisation, le dispositif peut être agencé en outre pour opérer en tant que pile à combustible dihydrogène-dioxygène, l'espèce oxydante étant du dioxygène et l'espèce réductrice étant du dihydrogène.

Le fonctionnement en tant que pile à combustible dihydrogène-dioxygène peut utiliser tout type de gaz carbonés comprenant une source d'hydrogène pouvant être oxydée par l'électrode négative tels que par exemple des bio-alcools ou du méthane. L'air constitue alors une source de dioxygène pour l'électrode positive poreuse.

Selon un mode de réalisation, le dispositif peut être agencé en outre pour opérer en tant que réacteur d'ammoniaque.

Le fonctionnement en tant que réacteur d'ammoniaque permet d'utiliser en outre l'azote pour le faire réagir avec les protons sur l'électrode négative.

Selon un mode de réalisation, le dispositif peut être agencé en outre pour opérer en tant qu'électrolyseur.

Utilisé comme électrolyseur, une pile à combustible génère les espèces réductrices et oxydantes par ajout d'une tension électrique ou d'un courant électrique. Dans le cas d'un électrolyseur d'eau, les espèces créées sont le dihydrogène sur l'anode et le dioxygène sur la cathode.

Selon un mode de réalisation, le dispositif peut être agencé en outre pour opérer en tant qu'appareil d'électro-réduction.

Un appareil d'électro-réduction permet par exemple de générer des combustibles de type alcools ou méthane.

L'invention se rapporte également à un procédé de fabrication d'un dispositif électrochimique à conduction protonique tel qu'exposé ci-avant. Ce procédé comprend :
- fabriquer une électrode positive poreuse apte à réduire une espèce oxydante ;
- fabriquer une électrode négative apte à oxyder une espèce réductrice ;
- fabriquer un conducteur protonique, mis en contact avec l'électrode positive et avec l'électrode négative.

Ce procédé comprend en outre la fabrication d'une couche apte à diffuser des protons et des électrons et formant barrière protectrice aux contaminants pour le conducteur protonique, ladite couche étant en contact avec le conducteur protonique d'une part et l'électrode négative d'autre part.

Un tel procédé présente l'avantage de ne nécessiter aucune modification particulière du procédé de fabrication standard d'un dispositif électrochimique à conducteur protonique. Il suffit de prévoir l'intercalation de la couche objet de la présente invention entre le conducteur protonique et l'électrode négative. Le procédé est donc facilement adaptable sur des chaînes de production existantes.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'une pile à combustible selon un mode de réalisation de l'invention;
- la figure 2 est une représentation schématique d'un électrolyseur selon un mode de réalisation de l'invention;
- la figure 3 est une représentation schématique d'un réacteur d'ammoniaque selon un mode de réalisation de l'invention ;
- la figure 4 est une représentation schématique d'un appareil d'électro-réduction selon un mode de réalisation de l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

La présente invention propose d'intégrer une couche possédant des propriétés mixtes de conduction électronique et de conduction protonique à l'intérieur d'un dispositif électrochimique à conduction protonique. L'invention permet de la sorte d'opérer un filtrage sélectif ne laissant passer préférentiellement que les porteurs de charge (protons et électrons) qui interviennent dans le fonctionnement du dispositif électrochimique, mais bloquent le passage de toute autre espèce susceptible de constituer un contaminant dommageable pour le conducteur protonique. L'invention protège ainsi le conducteur protonique d'un dispositif électrochimique, et plus particulièrement son conducteur protonique, contre des contaminants, sans entraver le fonctionnement du dispositif. La couche intégrée dans le dispositif électrochimique à conduction protonique agit ainsi comme un filtre de protons et d'électrons, et permet la protection de l'électrolyte conducteur protonique aux résidus de la réaction de reformage interne issus de combustibles gazeux à source hydrogène (biogaz par exemple) d'un dispositif électrochimique.

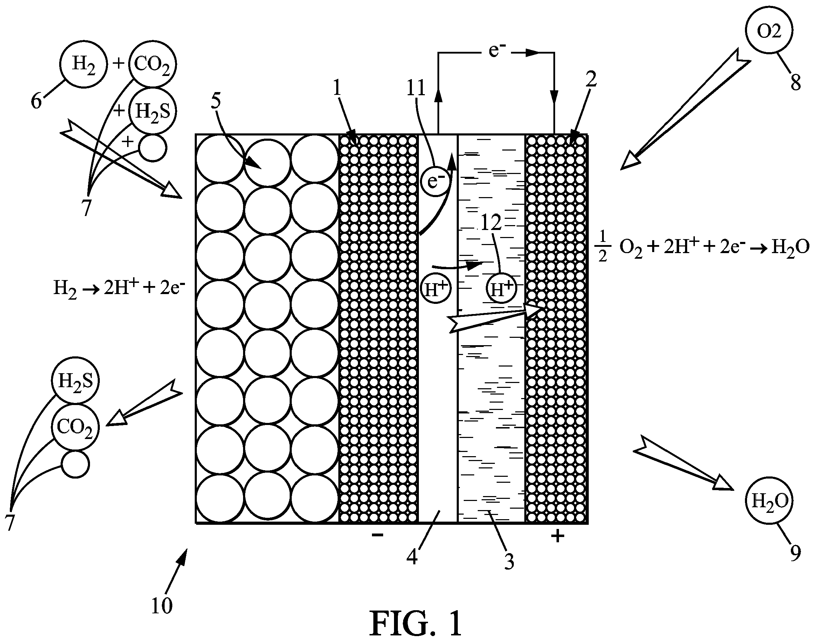

Les figures 1 à 4 illustrent schématiquement le fonctionnement de dispositifs électrochimiques pouvant bénéficier des enseignements de la présente invention. D'autres types de dispositifs électrochimiques, notamment des piles à combustibles fonctionnant selon d'autres réactions chimiques, peuvent également bénéficier de l'adjonction entre un électrolyte conducteur protonique et une électrode négative, d'une couche mixte apte à conduire des protons et des électrons, tout en bloquant des contaminants.

Comme illustré sur la figure 1, un exemple de dispositif électrochimique à conducteur protonique selon la présente invention peut se présenter sous la forme d'une pile à combustible 10 dihydrogène-dioxygène.

Une telle pile à combustible peut être une pile PEMFC avec un conducteur protonique 3 se présentant sous la forme d'une membrane organique hydratée. Il peut également s'agir d'une pile de type SOFC ou plus particulièrement de type PCFC, dans laquelle l'électrolyte conducteur protonique 3 se présente sous la forme d'un matériau solide, par exemple en céramique.

Comme illustré sur la figure 1, la pile à combustible comprend une électrode négative 1 formant une anode. Cette anode est représentée comme étant une structure poreuse. L'électrode négative peut notamment être une couche d'électrode à hydrogène mésoporeuse fabriquée en un matériau de type alliage céramique-métal (cermet) comprenant par exemple du nickel et un matériau d'électrolyte. Une électrode négative de type cermet a typiquement une épaisseur d'environ 50 à 100 µm. L'anode est le siège de la réaction de dissociation de l'hydrogène en protons et électrons, par oxydation. Cette électrode négative 1 en cermet possède des propriétés de conduction mixte et conduit à la fois les électrons et les protons. L'électrode négative 1 peut également être le siège d'une recombinaison d'électrons et de protons pour former du dihydrogène lorsque la pile à combustible est utilisée en tant qu'électrolyseur. Elle peut être également le siège du reformage interne du combustible entrant.

L'électrode négative 1 est au contact d'une couche formant support macroporeux 5, permettant la diffusion du combustible et des gaz arrivant vers l'anode et des espèces (résidus de la réaction d'oxydation, gaz, surplus de combustible, contaminants bloqués) arrivant depuis l'anode. Le support macroporeux 5 peut typiquement être constitué d'un métal tel que le nickel ou du cermet, et possède une épaisseur généralement comprise entre 100 µm et 2000 µm.

La pile à combustible de la figure 1 comprend en outre une électrode positive 2 poreuse formant une cathode. Cette électrode positive 2 peut se présenter sous la forme d'une couche à conduction mixte, apte à conduire à la fois les électrons e⁻ et les protons H⁺. Comme indiqué sur la figure 1, l'électrode positive d'une pile à combustible est le siège d'une réaction de réduction de l'oxygène 8 de l'air. L'oxygène O₂ se recombine avec les protons 12 et les électrons 11 pour former de l'eau 9.

L'espace entre l'anode et la cathode est occupé par un électrolyte conducteur protonique 3. Comme indiqué ci-avant, ce conducteur peut être soit une membrane organique hydratée dans le cas des piles PEMFC ou bien un oxyde solide céramique dans le cas des PCFC. L'électrolyte conducteur protonique 3 se compose généralement d'une couche dense, assurant une conduction exclusive pour les protons, mais ne conduisant pas les électrons 11. Les électrons 11 peuvent être fournis et récupérés par un circuit électrique extérieur assurant une connexion électrique indirecte entre l'anode et la cathode. L'épaisseur du conducteur protonique 3 est typiquement comprise entre 5 µm et 50 µm.

L'une des contributions de la présente invention à l'amélioration des performances des dispositifs électrochimiques à conducteur protonique réside dans l'utilisation de la couche 4 intercalée entre le conducteur protonique 3 et l'électrode négative 1. Cette couche 4 est typiquement une couche mixte à la fois conductrice de protons 12 et d'électrons 11. Par simplicité, il est fait référence à ces multiples propriétés sous l'appellation MIEC-H⁺ pour « mixted ionic and electronic conductor » selon la terminologie anglo-saxonne.

Cette couche 4 est avantageusement placée entre l'électrolyte conducteur protonique 3 et l'électrode négative 1 pour protéger l'électrolyte conducteur protonique 3 du combustible alimentant la pile à combustible 10.

La figure 1 illustre schématiquement l'apport d'un combustible depuis l'extérieur et en direction de l'électrode négative 1. Le combustible représenté sur la figure 1 comprend une source de dihydrogène 6, noté H₂, ainsi que des contaminants 7 tels que le dioxyde de carbone CO₂, le sulphure de dihydrogène H₂S ou d'autres polluants comme le monoxyde de carbone CO par exemple. Typiquement, les sources de dihydrogène qui peuvent servir à alimenter une pile à combustible incluent les biogaz, les bio-alcools, le méthane. Ces combustibles comprennent généralement, outre la source de dihydrogène, un mélange de gaz reformat par exemple avec des composés tels que CO, CO₂ et N₂ et toutes sortes de dérivés carbonés, qui constituent une pollution dommageable et irréversible pour l'électrolyte conducteur protonique 3. Les éléments autres que le dihydrogène peuvent tous constituer une source de contaminants 7 susceptibles d'endommager l'électrolyte conducteur protonique 3 de la pile à combustible 10 de manière irréversible. Toutefois, la présence de la couche 4 permet de former une barrière protectrice qui empêche ces contaminants d'atteindre l'électrolyte conducteur protonique 3, mais n'empêche pas le combustible quel qu'il soit d'atteindre l'électrode négative 1 siège de la réaction d'oxydation, génératrice de protons et d'électrons.

La couche 4 possède avantageusement une densité suffisante pour remplir son rôle de barrière aux contaminants 7 tout en assurant une conduction optimale pour les électrons 11 et les protons 12. L'effet de barrière aux contaminants est amélioré lorsque la densité de la couche 4 augmente. En outre, les propriétés de cinétiques de diffusion des électrons et des protons de la couche 4 augmentent lorsque la densité de la couche 4 augmente. Pour cette raison, la densité de la couche 4 peut avantageusement être supérieure à 90% en volume, pour assurer simultanément un fonctionnement optimal pour ces deux fonctions. Une telle densité correspond à une porosité inférieure à 10% en volume de la couche 4.

De manière analogue, les cinétiques de diffusion des protons et des électrons de la couche 4 diminuent lorsque l'épaisseur de la couche 4 augmente, tandis que l'effet de barrière aux contaminants de cette même couche 4 augmente lorsque l'épaisseur de la couche 4 augmente. Des performances optimales pour les deux fonctions recherchées pour la couche 4 sont atteintes lorsque la couche 4 a une épaisseur comprise entre 1 µm et 10 µm.

En outre, la couche 4 peut être réalisée en un matériau possédant une structure cristallographique adaptée à une conduction électronique et protonique, tout en empêchant les autres espèces de passer. De la sorte, la couche 4 présente un caractère de sélectivité préférentiellement aux électrons 11 et aux protons 12. Parmi les composés ayant cette propriété, on trouve les composés dérivés de la famille des pérovskites, qui peuvent être représentés par un matériau de type ABO₃, dans lequel A est un élément choisi parmi le groupe II du tableau périodique, B est un élément choisi parmi le cérium ou le groupe IVB du tableau périodique.

Plus particulièrement, des pérovskites dans lesquelles A est choisi parmi le baryum Ba ou le strontium Sr, B est choisi parmi le zirconium Zr ou le cérium Ce.

Alternativement, il est également possible de réaliser la couche 4 en un matériau de type ABB'O₃, dans lequel A est un élément choisi parmi le groupe II du tableau périodique, B est un élément choisi parmi le cérium ou le groupe IVB du tableau périodique, B' est un élément choisi parmi les lanthanides ou le groupe VIIIB du tableau périodique.

Plus particulièrement, des matériaux de type ABB'O₃, dans lesquels A est choisi parmi le baryum Ba ou le strontium Sr, B est choisi parmi le zirconium Zr ou le cérium Ce, et B' est choisi parmi le praséodyme Pr, le vanadium V, le Cobalt Co ou le néodyme Nd.

Les deux catégories de matériaux présentées ci-avant présentent l'avantage supplémentaire d'être résistants à des températures typiquement rencontrées dans les piles à combustible de type PCFC, comprises entre 400°C et 700°C et plus particulièrement des températures supérieures à 550°C, sous atmosphère réductrice et vapeur d'eau. Ces composés offrent ainsi une grande stabilité mécanique et physico-chimique au dispositif électrochimique à conducteur protonique qui en est équipé.

Il convient de remarquer que la couche 4 peut être utilisée dans tous types de dispositifs PEFC, c'est-à-dire à la fois ceux comprenant des électrolytes polymères, généralement utilisés pour des applications en dessous de 250°C, ceux comprenant des matériaux céramiques, typiquement utilisés pour des applications au-dessus de 400°C et plus particulièrement au-dessus de 550°C, et ceux comprenant des matériaux différents pour des températures intermédiaires comprises entre 250-400°C. Parmi les électrolytes conducteurs protoniques utilisés à des températures intermédiaires on trouve par exemple le CsH₂PO₄.

La couche 4 étant intercalée entre l'électrolyte conducteur protonique 3 et l'électrode négative 1, elle n'est pas autosupportée et peut avoir une épaisseur fine adaptée aux propriétés recherchées d'effet barrière et de conduction mixte. En cela, la couche 4 de MIEC-H+ n'est pas comparable à une membrane épaisse de matériaux dérivés de la famille des pérovskites.

Il convient de remarquer que la couche 4 peut être constituée en un seul type de matériau monophasé (formant alors une phase céramique unique), ou bien en un mélange de plusieurs composés différents, biphasés ou multiphasés, pouvant par exemple se présenter sous la forme de composites céramique-céramique ou bien de composites céramique-métal.

Comme illustré sur la figure 1, le circuit électrique assurant une connexion entre l'anode et la cathode relie l'électrode positive 2 poreuse à la couche 4. Toutefois, le circuit électrique peut également relier directement l'anode à la cathode.

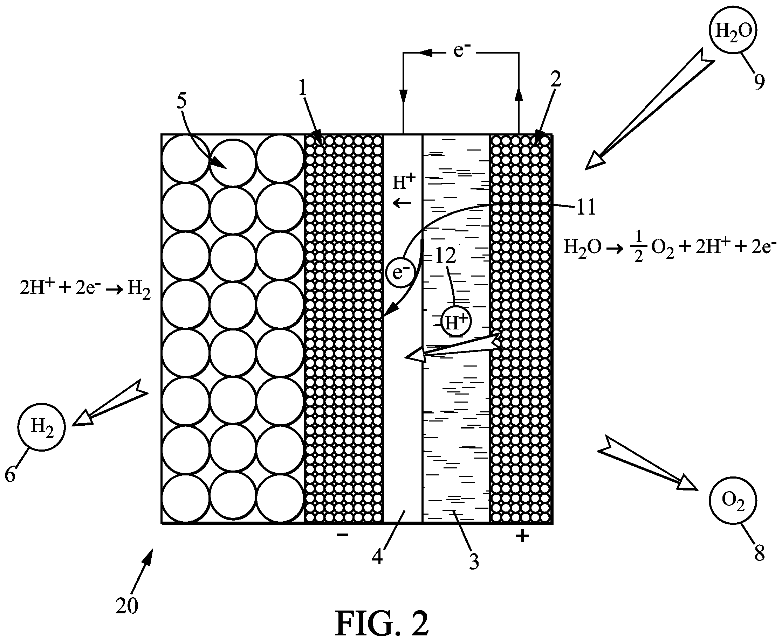

La réaction de consommation des réactifs que sont le dioxygène et le dihydrogène, comme représenté sur la figure 1, peut également être inversée par apport d'énergie et de chaleur pour produire ces mêmes combustibles à partir d'eau. Dans ce cas, un dispositif électrochimique analogue à une pile à combustible fonctionne en tant qu'électrolyseur 20 comme représenté sur la figure 2.

Lorsque le dispositif électrochimique de la figure 2 est activé, de l'eau 9 arrivant sur l'électrode positive 2 poreuse à l'état vapeur est hydrolysée pour produire des protons 12, des électrons 11 et du dioxygène 8. Protons 12 et électrons 11 arrivent sur l'électrode négative 1 pour réagir et former du dihydrogène 6. L'électrolyseur 20 de la figure 2 protège également l'électrolyte conducteur protonique 3 de tout contaminant pouvant transiter par le support macroporeux 5 et l'électrode négative 1.

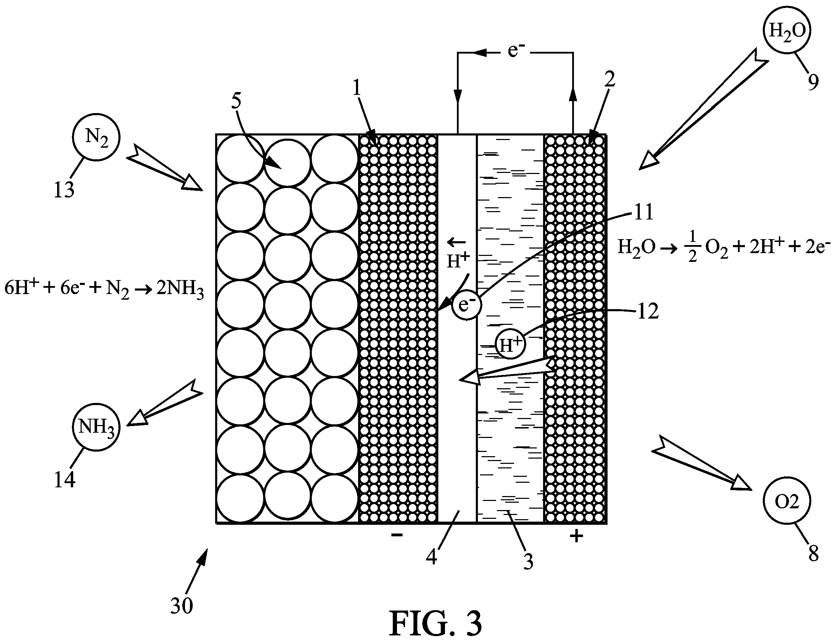

Un autre exemple de mise en oeuvre de la présente invention est représenté sur la figure 3. Sur cette figure, un dispositif électrochimique à conducteur protonique agencé sous forme de réacteur d'ammoniaque 30 est représenté. Cette synthèse d'ammoniaque est réalisée en alimentant l'électrode positive 2 en eau 9, pour produire des protons 12 et électrons 11 ainsi que du dioxygène 8. Les protons et électrons réagissent ensuite sur l'électrode négative 1 en combinaison avec l'azote 13 entrant pour former de l'ammoniaque 14. Le réacteur d'ammoniaque 30 protège l'électrolyte conducteur protonique 3 de l'ammoniaque 14, qui ne peut pas franchir la couche 4 de MIEC-H⁺.

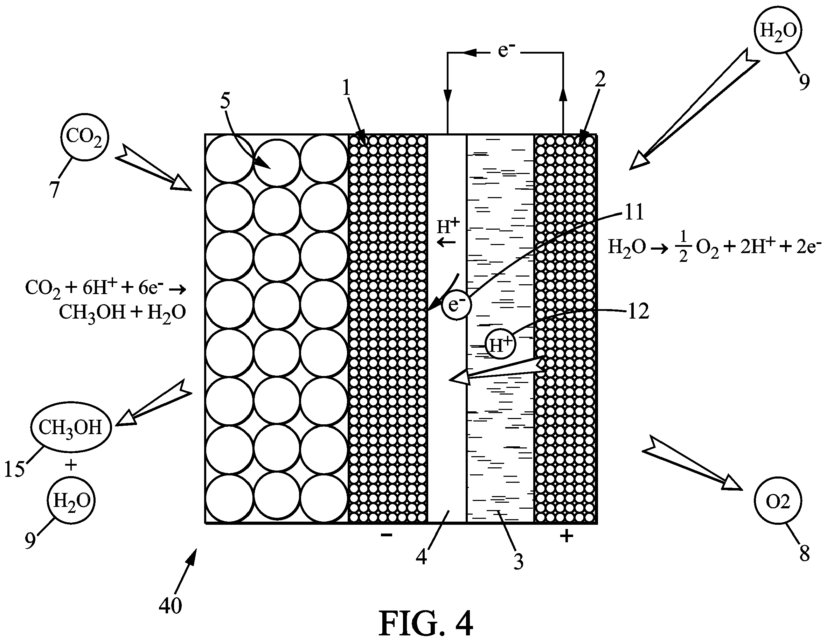

Un autre exemple de dispositif électrochimique à conducteur protonique pouvant bénéficier de la présente invention est représenté à la figure 4. Sur cette figure, un appareil d'électro-réduction 40 est utilisé pour produire notamment du méthanol CH₃OH. Dans cette configuration, l'électrode positive 2 produit à partir d'eau 9 du dioxygène 8, des électrons 11 et des protons 12. Le dioxyde de carbone entrant réagit avec les protons 12 et les électrons 11 pour produire notamment de l'eau 9 et du méthanol 15 au niveau de l'électrode négative 1. Le CO₂ entrant sur l'électrode négative 1 n'endommage pas l'électrolyte conducteur protonique 3 du fait de la présence de la couche 4 entre l'électrolyte conducteur protonique 3 et l'électrode négative 1.

Ces différents exemples de dispositifs électrochimiques utilisant un électrolyte conducteur protonique sont fournis à titre illustratif. D'autres variantes de dispositifs, faisant intervenir d'autres espèces réductrices et oxydantes en guise de combustible peuvent également bénéficier des avantages conférés par l'adjonction d'une couche 4 telle que décrite ci-avant entre une électrode négative 1 et un électrolyte conducteur protonique 3.

La structure générale des dispositifs électrochimiques à conduction protonique présentés ci-avant suggère une structure en couches planes. Bien qu'une telle architecture soit envisageable, il peut lui être préférée une architecture tubulaire dans laquelle la partie centrale sert de lieu de réception de combustibles destinés à l'électrode positive 2 tandis que la surface extérieure est en contact avec le ou les combustibles alimentant l'électrode négative 1.

L'invention propose également un procédé pour fabriquer un dispositif électrochimique à conducteur protonique, tel que, par exemple, ceux présentés ci-avant. Le procédé comprend la fabrication de tous les constituants formant le dispositif électrochimique à conducteur protonique, avec en outre la fabrication d'une couche 4 de type MIEC-H+, et la mise en contact de cette couche avec l'électrode négative 1 d'une part, et l'électrolyte conducteur protonique 3 d'autre part. La fabrication de la couche 4 intervient pendant la fabrication des autres constituants du dispositif électrochimique à conducteur protonique. De part cette grande flexibilité, l'ajout d'une couche 4 dans un tel dispositif électrochimique à conduction protonique ne représente que très peu d'investissements lors sa fabrication.

## Revendications

1. Dispositif électrochimique à conduction protonique, comprenant :
- une électrode positive (2) apte à réduire une espèce oxydante ;
- une électrode négative (1) apte à oxyder une espèce réductrice ;
- un électrolyte conducteur protonique (3), occupant un espace entre l'électrode positive et l'électrode négative et permettant la conduction de protons entre l'électrode positive et l'électrode négative ;
le dispositif électrochimique comprenant en outre une couche (4) apte à diffuser des protons (12) et des électrons (11) et formant barrière protectrice aux contaminants (7) pour l'électrolyte conducteur protonique, ladite couche étant en contact avec l'électrolyte conducteur protonique d'une part et l'électrode négative d'autre part, la couche (4) apte à diffuser des protons (12) et des électrons comprenant un matériau choisi parmi : un matériau de type ABB'O₃, et un matériau de type ABO₃, dans lesquels A est un élément choisi parmi le groupe II du tableau périodique, B est un élément choisi parmi le cérium ou le groupe IVB du tableau périodique, B' est un élément choisi parmi les lanthanides ou le groupe VIIIB du tableau périodique, B' est un élément choisi parmi les lanthanides ou le groupe VIIIB du tableau périodique.

2. Dispositif selon la revendication 1, dans lequel la couche apte à diffuser des protons et des électrons a une épaisseur comprise entre 1 µm et 10 µm.

3. Dispositif selon l'une quelconque des revendications 1 ou 2, dans lequel la couche apte à diffuser des protons et des électrons possède une porosité inférieure à 10% en volume.

4. Dispositif selon l'une quelconque des revendications 1 à 3, comprenant en outre un support macroporeux (5) en contact avec l'électrode négative, le support macroporeux étant apte à diffuser des espèces gazeuses.

5. Dispositif selon l'une quelconque des revendications 1 à 4, dans lequel le conducteur protonique est une membrane polymère échangeuse de protons.

6. Dispositif selon l'une quelconque des revendications 1 à 4, dans lequel le conducteur protonique est un électrolyte solide apte à diffuser des protons.

7. Dispositif selon l'une quelconque des revendications 1 à 6, dans lequel le matériau de la couche (4) apte à diffuser des protons (12) et des électrons est une céramique monophasée.

8. Dispositif selon l'une quelconque des revendications 1 à 6, dans lequel de le matériau de la couche (4) apte à diffuser des protons (12) et des électrons est un matériau multiphasé.

9. Dispositif selon l'une quelconque des revendications 1 à 6, dans lequel le matériau de la couche (4) apte à diffuser des protons (12) et des électrons est un matériau biphasé choisi parmi un composite céramique-céramique ou bien un composite céramique-métal.

10. Utilisation du dispositif selon l'une quelconque des revendications 1 à 9 en tant que pile à combustible (10), l'espèce oxydante étant du dioxygène et l'espèce réductrice étant une source à dihydrogène.

11. Utilisation du dispositif selon l'une quelconque des revendications 1 à 9 en tant que réacteur d'ammoniaque (30).

12. Utilisation du dispositif selon l'une quelconque des revendications 1 à 9 en tant qu'électrolyseur (20).

13. Utilisation du dispositif selon l'une quelconque des revendications 1 à 9 en tant qu'appareil d'électro-réduction (40).

14. Procédé de fabrication d'un dispositif électrochimique à conduction protonique, comprenant :
- fabriquer une électrode positive (2) apte à réduire une espèce oxydante ;
- fabriquer une électrode négative (1) apte à oxyder une espèce réductrice ;
- fabriquer un électrolyte conducteur protonique (3), occupant un espace entre l'électrode positive et l'électrode négative et permettant la conduction de protons entre l'électrode positive et l'électrode négative ;
le procédé comprenant en outre :
- fabriquer une couche (4) apte à diffuser des protons (12) et des électrons (11) et formant barrière protectrice aux contaminants (7) pour l'électrolyte conducteur protonique, ladite couche étant en contact avec l'électrolyte conducteur protonique d'une part et l'électrode négative d'autre part, la couche (4) apte à diffuser des protons (12) et des électrons comprenant un matériau choisi parmi : un matériau de type ABB'O₃, et un matériau de type ABO₃,
dans lesquels A est un élément choisi parmi le groupe II du tableau périodique, B est un élément choisi parmi le cérium ou le groupe IVB du tableau périodique, B' est un élément choisi parmi les lanthanides ou le groupe VIIIB du tableau périodique, B' est un élément choisi parmi les lanthanides ou le groupe VIIIB du tableau périodique.

## Patentansprüche

1. Elektrochemische Vorrichtung mit Protonenleitung, umfassend:
- eine positive Elektrode (2), die geeignet ist, eine oxidierende Spezies zu reduzieren;
- eine negative Elektrode (1), die geeignet ist, eine reduzierende Spezies zu oxidieren;
- einen Protonenleitungselektrolyt (3), der einen Raum zwischen der positiven Elektrode und der negativen Elektrode einnimmt und die Leitung von Protonen zwischen der positiven Elektrode und der negativen Elektrode gestattet;
wobei die elektrochemische Vorrichtung außerdem eine Schicht (4) umfasst, die geeignet ist, Protonen (12) und Elektronen (11) diffundieren zu lassen und eine Schutzbarriere gegen Verunreinigungen (7) für den Protonenleitungselektrolyt bildet, wobei die Schicht einerseits mit dem Protonenleitungselektrolyt und andererseits mit der negativen Elektrode in Kontakt steht,
wobei die Schicht (4), die geeignet ist, Protonen (12) und Elektronen diffundieren zu lassen, ein Material umfasst, das ausgewählt ist aus: einem Material des Typs ABB'O₃ und einem Material des Typs ABO₃, wobei A ein Element ist, das aus der Gruppe II des Periodensystems ausgewählt ist, B ein Element ist, das aus Cer oder der Gruppe IVB des Periodensystems ausgewählt ist, B' ein Element ist, das aus den Lanthanoiden oder der Gruppe VIIIB des Periodensystems ausgewählt ist, und B' ein Element ist, das aus den Lanthanoiden oder der Gruppe VIIIB des Periodensystems ausgewählt ist.

2. Vorrichtung nach Anspruch 1, wobei die Schicht, die geeignet ist, Protonen und Elektronen diffundieren zu lassen, eine Dicke zwischen 1 µm und 10 µm aufweist.

3. Vorrichtung nach einem der Ansprüche 1 oder 2, wobei die Schicht, die geeignet ist, Protonen und Elektronen diffundieren zu lassen, eine Porosität von weniger als 10 Vol.-% aufweist.

4. Vorrichtung nach einem der Ansprüche 1 bis 3, außerdem umfassend einen mit der negativen Elektrode in Kontakt stehenden makroporösen Träger (5), wobei der makroporöse Träger geeignet ist, Gasspezies diffundieren zu lassen.

5. Vorrichtung nach einem der Ansprüche 1 bis 4, wobei der Protonenleiter eine Protonenaustausch-Polymermembran ist.

6. Vorrichtung nach einem der Ansprüche 1 bis 4, wobei der Protonenleiter ein fester Elektrolyt ist, der geeignet ist, Protonen diffundieren zu lassen.

7. Vorrichtung nach einem der Ansprüche 1 bis 6, wobei das Material der Schicht (4), die geeignet ist, Protonen (12) und Elektronen diffundieren zu lassen, eine einphasige Keramik ist.

8. Vorrichtung nach einem der Ansprüche 1 bis 6, wobei das Material der Schicht (4), die geeignet ist, Protonen (12) und Elektronen diffundieren zu lassen, ein mehrphasiges Material ist.

9. Vorrichtung nach einem der Ansprüche 1 bis 6, wobei das Material der Schicht (4), die geeignet ist, Protonen (12) und Elektronen diffundieren zu lassen, ein zweiphasiges Material ist, das aus einem Keramik-Keramik-Verbundstoff oder auch einem Keramik-Metall-Verbundstoff ausgewählt ist.

10. Verwendung der Vorrichtung nach einem der Ansprüche 1 bis 9 als Brennstoffzelle (10), wobei die oxidierende Spezies Disauerstoff ist, und die reduzierende Spezies eine Quelle von Diwasserstoff ist.

11. Verwendung der Vorrichtung nach einem der Ansprüche 1 bis 9 als Ammoniak-Reaktor (30).

12. Verwendung der Vorrichtung nach einem der Ansprüche 1 bis 9 als Elektrolysezelle (20).

13. Verwendung der Vorrichtung nach einem der Ansprüche 1 bis 9 als Elektroreduktionsgerät (40).

14. Verfahren zur Herstellung einer elektrochemischen Vorrichtung mit Protonenleitung, umfassend:
- Herstellen einer positiven Elektrode (2), die geeignet ist, eine oxidierende Spezies zu reduzieren;
- Herstellen einer negativen Elektrode (1), die geeignet ist, eine reduzierende Spezies zu oxidieren;
- Herstellen eines Protonenleitungselektrolyten (3), der einen Raum zwischen der positiven Elektrode und der negativen Elektrode einnimmt und die Leitung von Protonen zwischen der positiven Elektrode und der negativen Elektrode gestattet;
wobei das Verfahren außerdem umfasst:
- Herstellen einer Schicht (4), die geeignet ist, Protonen (12) und Elektronen (11) diffundieren zu lassen, und eine Schutzbarriere gegen Verunreinigungen (7) für den Protonenleitungselektrolyt bildet, wobei die Schicht einerseits mit dem Protonenleitungselektrolyt und andererseits mit der negativen Elektrode in Kontakt steht, wobei die Schicht (4), die geeignet ist, Protonen (12) und Elektronen diffundieren zu lassen, ein Material umfasst, das ausgewählt ist aus: einem Material des Typs ABB'O₃ und einem Material des Typs ABO₃,
wobei A ein Element ist, das aus der Gruppe II des Periodensystems ausgewählt ist, B ein Element ist, das aus Cer oder der Gruppe IVB des Periodensystems ausgewählt ist, B' ein Element ist, das aus den Lanthanoiden oder der Gruppe VIIIB des Periodensystems ausgewählt ist, und B' ein Element ist, das aus den Lanthanoiden oder der Gruppe VIIIB des Periodensystems ausgewählt ist.

## Claims

1. Proton-conductive electrochemical device, comprising:
- a positive electrode (2) able to reduce an oxidising species;
- a negative electrode (1) able to oxidise a reducing species;
- a proton-conductive electrolyte (3), occupying a space between the positive electrode and the negative electrode and allowing the conduction of protons between the positive electrode and the negative electrode;
the electrochemical device further comprising a layer (4) able to diffuse protons (12) and electrons (11) and forming a protective barrier against contaminants (7) for the proton-conductive electrolyte, said layer being in contact with the proton-conductive electrolyte on the one hand and the negative electrode on the other hand,
the layer (4) able to diffuse protons (12) and electrons comprising a material chosen from: a material of the type ABB'O₃, and a material of the type ABO₃, in which A is an element chosen from group II of the periodic table, B is an element chosen from cerium or group IVB of the periodic table, B' is an element chosen from lanthanides or group VIIIB of the periodic table, and B' is an element chosen from lanthanides or group VIIIB of the periodic table.

2. Device according to claim 1, in which the layer able to diffuse protons and electrons has a thickness of between 1 µm and 10 µm.

3. Device according to either claim 1 or claim 2, in which the layer able to diffuse protons and electrons has a porosity of less than 10% by volume.

4. Device according to any of claims 1 to 3, further comprising a macroporous support (5) in contact with the negative electrode, the macroporous support being able to diffuse gaseous species.

5. Device according to any of claims 1 to 4, in which the proton conductor is a proton-exchange polymer membrane.

6. Device according to any of claims 1 to 4, in which the proton conductor is a solid electrolyte able to diffuse protons.

7. Device according to any of claims 1 to 6, in which the material of the layer (4) able to diffuse protons (12) and electrons is a single-phase ceramic.

8. Device according to any of claims 1 to 6, in which material of the layer (4) able to diffuse protons (12) and electrons is a multiphase material.

9. Device according to any of claims 1 to 6, in which the material of the layer (4) able to diffuse protons (12) and electrons is a two-phase material chosen from a ceramic-ceramic composite or a ceramic-metal composite.

10. Use of the device according to any of claims 1 to 9 as a fuel cell (10), the oxidising species being dioxygen and the reducing species being a dihydrogen source.

11. Use of the device according to any of claims 1 to 9 as an ammonia reactor (30).

12. Use of the device according to any of claims 1 to 9 as an electrolyser (20).

13. Use of the device according to any of claims 1 to 9 as an electroreduction apparatus (40).

14. Method for manufacturing a proton-conductive electrochemical device, comprising:
- manufacturing a positive electrode (2) able to reduce an oxidising species;
- manufacturing a negative electrode (1) able to oxidise a reducing species;
- manufacturing a proton-conductive electrolyte (3), occupying a space between the positive electrode and a negative electrode and allowing the conduction of protons between the positive electrode and the negative electrode;
the method further comprising:
- manufacturing a layer (4) able to diffuse protons (12) and electrons (11) and forming a protective barrier against contaminants (7) for the proton-conductive electrolyte, said layer being in contact with the proton-conductive electrolyte on the one hand and the negative electrode on the other hand, the layer (4) able to diffuse protons (12) and electrons comprising a material chosen from: a material of the type ABB'O₃, and a material of the type ABO₃,
in which A is an element chosen from group II of the periodic table, B is an element chosen from cerium and group IVB of the periodic table, B' is an element chosen from lanthanides or group VIIIB of the periodic table, and B' is an element chosen from lanthanides or group VIIIB of the periodic table.
